# EUROPÄISCHE PATENTANMELDUNG

(11) **EP 0 851 054 A2**
(43) Veröffentlichungstag der Anmeldung: **01.07.1998**
(21) Anmeldenummer: 97121241.0
(22) Anmeldetag: 03.12.1997
(51) Int. Cl.: D06F 39/00

(54) **Verfahren zur Übermittlung von Programm- und Gerätedaten eines programmgesteuerten Haushaltgeräts**

(30) Priorität: 04.12.1996 DE 19650308; 26.03.1997 DE 19712607
(71) Anmelder: Miele & Cie. GmbH & Co., D-33332 Gütersloh (DE)
(72) Erfinder: Basner, Joachim, 33334 Gütersloh (DE); Zinkann, Peter, Dr., 33332 Gütersloh (DE)

(57) **Zusammenfassung**

Die Erfindung betrifft ein Verfahren zur Übermittlung von Programm- und Gerätedaten eines programmgesteuerten Haushaltgeräts (1) unter Verwendung einer ersten Anzeigevorrichtung (5), mit der die Daten räumlich getrennt vom Haushaltgerät (1) darstellbar sind, wobei die Daten von einem im Gerät integrierten, mit der Programmsteuerung (2; 3) über eine Datenleitung verbundenen Sender (4) drahtlos an einen in der ersten Anzeigevorrichtung (5) integrierten Empfänger (6) übermittelt werden. Damit auch in großer räumlicher Entfernung Angaben über Programm- und Gerätedaten sowie über aufgetretene Fehlerzustände abgerufen werden können, wird vorgeschlagen, daß die erste Anzeigevorrichtung (5) über eine Schnittstelle (10; 11; 13) zur Übergabe der Daten mit einer Steuereinheit (12) verbunden ist, und daß die von der ersten Anzeigevorrichtung (5) empfangenen Daten durch die Steuereinheit (12; 14) nach einer Datenfernübertragung insbesondere über das Fernsprechnetz (15; 16; 17; 18; 19) durch eine zweite Anzeigevorrichtung (20; 21) darstellbar sind.

## Beschreibung

Die Erfindung betriffl ein Verfahren zur Übermittlung von Programm- und Gerätedaten eines programmgesteuerten Haushaltgeräts unter Verwendung einer Anzeigevorrichtung, mit der die Daten räumlich getrennt vom Haushaltgerät darstellbar sind, wobei die Daten von einem im Gerät integrierten, mit der Programmsteuerung über eine Datenleitung verbundenen Sender drahtlos an einen in der Anzeigevorrichtung integrierten Empfänger übermittelt werden.

Daneben betriffl die Erfindung ein Verfahren zur Übermittlung von Programm- und Gerätedaten eines programmgesteuerten Haushaltgeräts, wobei die Daten von einem im Gerät integrierten, mit der Programmsteuerung über eine Datenleitung verbundenen Sender drahtlos an einen Empfänger übermittelt werden.

Anzeigevorrichtungen der vorgenannten Art sind beispielsweise durch die EP 742 308 A1 bekannt. Dort ist mehreren Haushaltgeräten eine sog. mobile Ablaufanzeige zugeordnet, mit der Programm- und Gerätedaten auf einem Display unabhängig vom Aufstellungsort der Geräte darstellbar sind. Die Reichweite des Senders ist derart angepaßt, daß die Daten vom Empfänger der mobilen Ablauanzeige innerhalb eines Wohnhauses in jedem Raum problemlos empfangen werden können. Aus rechtlichen Gründen ist die Sendeleistung derart begrenzt, daß ein über die Grenzen des Wohnraums hinausgehender Empfang nicht möglich ist.

Beim Gebrauch von Haushaltgeräten können Fehler auftreten, die durch unsachgemäßen Gebrauch des Geräts oder durch falsche Einstellungen hervorgerufen werden. Oft wird dies vom Benutzer des Geräts nicht erkannt und er bestellt einen Kundendienstmonteur zur Behebung solcher Fehler. Es entstehen dann unnötige Kosten für dessen Anfahrt, die bei genauer Kenntnis des Fehlers nicht notwendig gewesen wäre. Zum anderen kann der Fall auftreten, daß zur Behebung eines Gerätedefekts ein Ersatzteil notwendig ist, welches der Kundendienstmonteur nicht vorrätig hat. Auch in diesem Fall entstehen Anfahrtskosten, die bei Kenntnis des Defekts vermeidbar gewesen wären.

Der Erfindung stellt sich somit das Problem, ein Haushaltsgerät mit einer Anzeigevorrichtung zu offenbaren, bei der auch in großer räumlicher Entfernung Angaben über Programm- und Gerätedaten oder über aufgetretene Fehlerzustände abgerufen werden können. Erfindungsgemäß wird dieses Problem durch ein Haushaltgerät mit einer Anzeigevorrichtung gelöst, welches die Merkmale eines der unabhängigen Patentansprüche besitzt. Vorteilhafte Ausgestaltungen der Erfindung ergeben sich aus den jeweils nachfolgenden abhängigen Ansprüchen.

Ein Ausführungsbeispiel der Erfindung ist in den Zeichnungen rein schematisch dargestellt und wird nachfolgend näher beschrieben. Es zeigt
- Figur 1: eine Waschmaschine (1) mit einer mobilen Ablaufanzeige (5)
- Figur 2: das Blockschaltbild eines Ausführungsbeispiels einer Übertragungsstrecke von der Waschmaschine (1) zu einem externen PC (21)
- Figur 3: das Blockschaltbild eines zweiten Ausführungsbeispiels einer Übertragungs- strecke

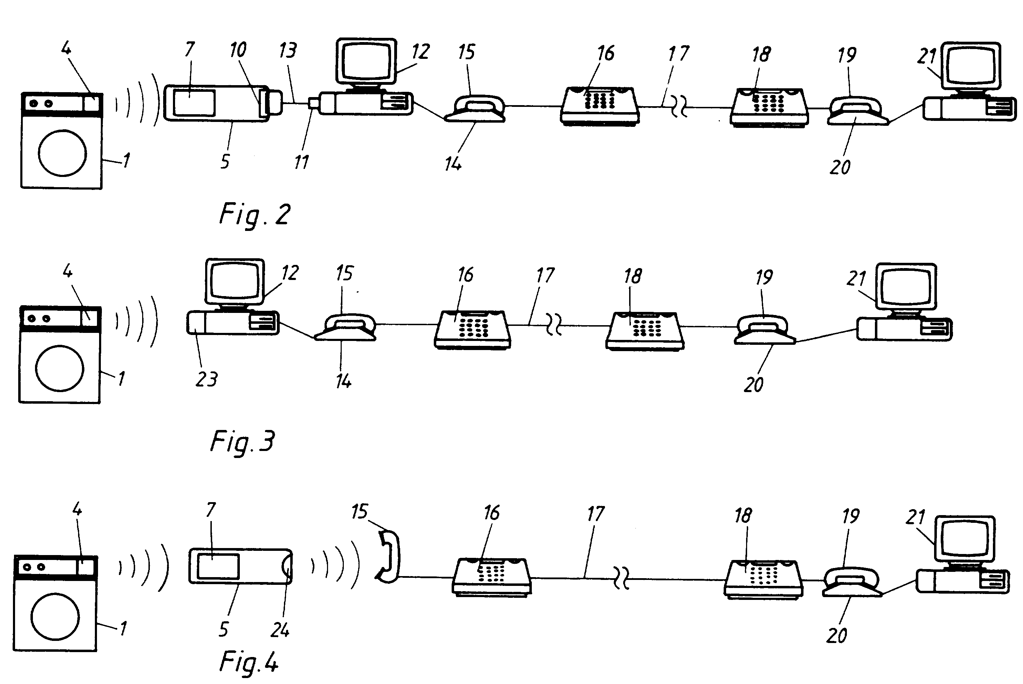

- Figur 3: das Blockschaltbild eines dritten Ausführungsbeispiels einer Übertragungs-strecke

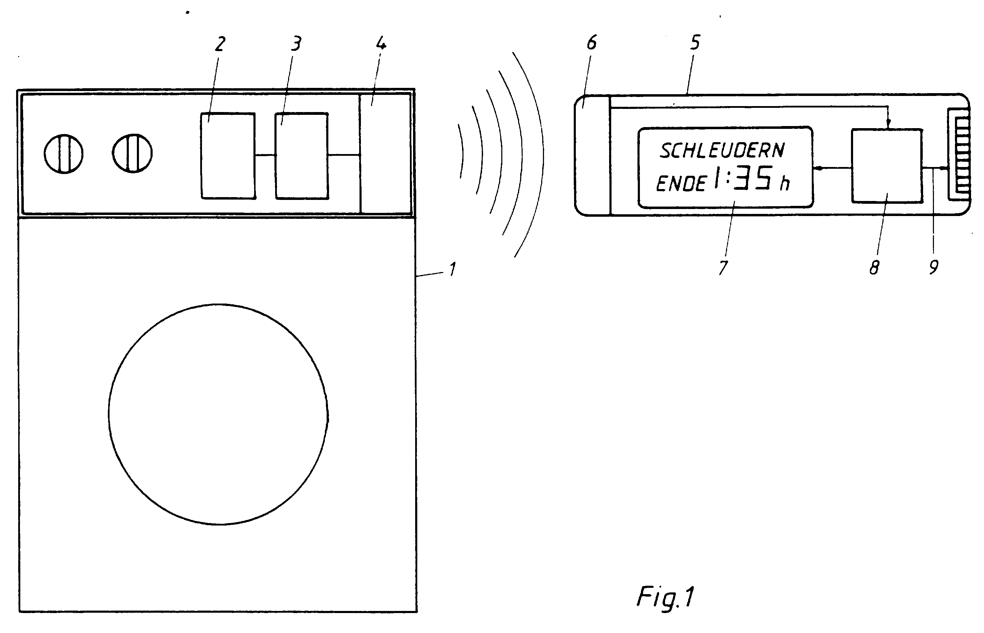

Die Figur 1 zeigt eine Waschmaschine (1) mit einer an sich bekannten elektronischen Mikroprozessor-Steuerung (2). In dieser Mikroprozessor-Steuerung (2) ist ein nichtflüchtiger Speicher, ein E²PROM (3) integriert, in dem während des Programmablaufs folgende Programm- und Gerätedaten abgelegt sind:
- der Gerätetyp
- die Softwareversion des Steuerprogramms
- das gewählte Programm
- der erreichten Betriebszustand
- die restliche Programmlaufzeit
- Fehlermeldungen
- die Häufigkeit der Anwahl von Programmen und Zusatzfunktionen
- die bisher vom Gerät geleisteten Betriebsstunden.

Der vollständige Inhalt dieses Speichers (3) oder Teile hiervon werden an einen Sender (4) in der Waschmaschine (1) übergeben, in Funksignale umgewandelt und in zyklischen Zeitabständen gesendet.

Die vom Sender (4) übermittelten Daten werden vom Empfänger (6) einer aus der EP 742 308 A1 bekannten mobilen Ablaufanzeige (5) empfangen. Der Aufbau einer solchen Anzeige (5) hinsichtlich ihrer Funktion als Empfänger (6) und Anzeigevorrichtung (7) ist aus der vorgenannten Patentanmeldung bekannt und soll deswegen hier nicht weiter beschrieben werden.

In einer internen Steuerung (8) der mobilen Ablaufanzeige (5) kann eine Aufbereitung der Daten für die anschließende Weitergabe erfolgen. Von dieser Steuerung (8) ist eine Datenleitung (9) an eine erste Steckvorrichtung (10) gelegt.

Figur 2 zeigt die weitere Übertragung der vorgenannten Daten. Eine zweite Steckvorrichtung (11) befindet sich an einer externen Steuereinheit, beispielsweise einem PC (12). Mobile Ablaufanzeige (5) und PC (12) können nun über ein Kabel (13) oder direkt miteinander verbunden werden. Über diese Schnittsstelle können somit die Daten aus dem E²PROM an den PC (12) weitergegeben werden und dann über ein Modem (14) per Datenfernübertragung über das Fernsprechnetz (15; 16; 17; 18;19)) an ein zweites Modem (20) und hierüber an einen weiteren PC (21) beim Kundendienstmonteur übermittelt werden. Im PC (22) des Kundendienstmonteurs werden die Daten aufbereitet und auf dem Bildschirm dargestellt, so daß dieser sich einen Überblick über die Betriebs- und Gerätedaten und den aufgetretenen Fehler verschaffen kann oder anhand der Daten einen Rückschluß auf den Fehler ziehen kann. Ein Diagnoseprogramm kann darüber hinaus anhand der übermittelten Daten bereits Wartungs- und Reparaturvorschläge ausarbeiten.

Da der Benutzer der Waschmaschine (1) in der Regel nicht an einer Anzeige aller vorgenannten Daten interessiert ist, kann die mobile Ablaufanzeige (5) mit einer in den Zeichnungen nicht dargestellten Umschaltvorrichtung zwischen Anzeige und Datenübermittlung ausgestattet sein.

Anstelle der mobilen Ablaufanzeige (5) kann ein in Figur 3 dargestellter PC (22) mit integriertem oder angekoppeltem Empfänger (23) verwendet werden. In diesem Fall müssen die Daten im PC (12) selbst aufbereitet werden.

In einer weiteren, in Figur 4 dargestellten Ausführungsform der Erfindung wird ein in der mobilen Ablaufanzeige (5) integrierter Summer (24) dazu verwendet, die Daten aus dem E²PROM (3) über den Fernsprecher (15; 16) selbst auf dem akkustischen Weg zu übertragen. Bei einer solchen Einrichtung kann auf den PC (12; 22) als Steuereinheit und das erste Modem (14) verzichtet werden. Anstelle des Summers (24) kann auch ein Elektromagnet (nicht dargestellt) in der mobilen Ablaufanzeige (5) integriert werden, der die Daten aus dem E²PROM (3) in magnetische Impulse umwandelt. Diese werden dann über den Fernsprecher (15; 16) als Brummfrequenz vom PC (21) des Kundendienstmonteurs ausgewertet.

## Patentansprüche

1. Verfahren zur Übermittlung von Programm- und Gerätedaten eines programmgesteuerten Haushaltgeräts (1) unter Verwendung einer ersten Anzeigevorrichtung (5), mit der die Daten räumlich getrennt vom Haushaltgerät (1) darstellbar sind, wobei die Daten von einem im Gerät integrierten, mit der Programmsteuerung (2; 3) über eine Datenleitung verbundenen Sender (4) drahtlos an einen in der ersten Anzeigevorrichtung (5) integrierten Empfänger (6) übermittelt werden,
dadurch gekennzeichnet,
daß die erste Anzeigevorrichtung (5) über eine Schnittstelle (10; 11; 13) zur Übergabe der Daten mit einer Steuereinheit (12) verbunden ist, und daß die von der ersten Anzeigevorrichtung (5) empfangenen Daten durch die Steuereinheit (12; 14) nach einer Datenfernübertragung insbesondere über das Fernsprechnetz (15; 16; 17; 18; 19) durch eine zweite Anzeigevorrichtung (20; 21) darstellbar sind.

2. Verfahren zur Übermittlung von Programm- und Gerätedaten eines programmgesteuerten Haushaltgeräts (1), wobei die Daten von einem im Gerät (1) integrierten, mit der Programmsteuerung (2; 3) über eine Datenleitung verbundenen Sender (4) drahtlos an einen Empfänger (23) übermittelt werden,
dadurch gekennzeichnet,
daß der Empfänger an eine Steuereinheit (22; 14) angekoppelt oder in dieser integriert ist, mit der die empfangenen Daten durch Datenfernübertragung insbesondere über das Fernsprechnetz (15; 16; 17; 18; 19) zu einer Anzeigevorrichtung (20; 21) übermittelbar sind.

3. Verfahren zur Übermittlung von Programm- und Gerätedaten eines programmgesteuerten Haushaltgeräts (1) nach einem der Ansprüche 1 oder 2,
dadurch gekennzeichnet,
daß die Steuereinheit als ein mit einem Modem (14) verbundener PC (12; 22) ausgebildet ist.

4. Verfahren zur Übermittlung von Programm- und Gerätedaten eines programmgesteuerten Haushaltgeräts (1) unter Verwendung einer Anzeigevorrichtung (5), mit die Daten räumlich getrennt vom Haushaltgerät (1) darstellbar sind, wobei die Daten von einem im Gerät integrierten, mit der Prog Programmsteuerung (2; 3) über eine Datenleitung verbundenen Sender (4) drahtlos an einen in der Anzeigevorrichtung (5) integrierten Empfänger (6) übermittelt werden,
dadurch gekennzeichnet,.
daß in der ersten Anzeigevorrichtung (5) eine Vorrichtung (24) zur Umwandlung der Daten in durch einen Fernsprecher übertragbare Tonsignale integriert ist.

5. Verfahren zur Übermittlung von Programm- und Gerätedaten eines programmgesteuerten Haushaltgeräts (1) nach Anspruch 4,
dadurch gekennzeichnet,
daß die Vorrichtung als Summer (24) ausgebildet ist.

6. Verfahren zur Übermittlung von Programm- und Gerätedaten eines programmgesteuerten Haushaltgeräts (1) nach Anspruch 4,
dadurch gekennzeichnet,
daß die Vorrichtung als Elektromagnet ausgebildet ist.

7. Verfahren zur Übermittlung von Programm- und Gerätedaten eines programmgesteuerten Haushaltgeräts (1) nach mindestens einem der Ansprüche 1 bis 6,
dadurch gekennzeichnet,
daß die Anzeigevorrichtung (20; 21) als ein mit einem Modem (20) verbundener PC (21) ausgebildet ist, auf welchem ein Programm zur Darstellung und/oder Auswertung der Daten abgespeichert ist.

8. Verfahren zur Übermittlung von Programm- und Gerätedaten eines programmgesteuerten Haushaltgeräts (1) nach mindestens einem der Ansprüche 1 bis 7,
dadurch gekennzeichnet,
daß die Daten Informationen über während eines Programmablaufs aufgetretene Fehlerzustände enthalten.

9. Verfahren zur Übermittlung von Programm- und Gerätedaten eines programmgesteuerten Haushaltgeräts nach mindestens einem der Ansprüche 1 bis 8,
dadurch gekennzeichnet,
daß die Programmsteuerung (2,3) einen nichtflüchtigen Speicher (3) beinhaltet, in welchem Programm- und Gerätedaten sowie Daten über während eines Programmablaufs aufgetretene Fehlerzustände abgespeichert sind und daß der gesamte Speicherinhalt periodisch durch den Sender (4) ausgelesen und übertragen wird.
